(19) Europäisches Patentamt / European Patent Office / Office européen des brevets

(11) **EP 4 718 023 A1**

(12) **DEMANDE DE BREVET EUROPEEN**

(43) Date de publication:
**01.04.2026 Bulletin 2026/14**

(21) Numéro de dépôt: **25204881.4**

(22) Date de dépôt: **26.09.2025**

(51) Classification Internationale des Brevets (IPC):
**G01B 11/24** (2006.01)   **G01N 21/88** (2006.01)
**G06T 7/00** (2017.01)

(52) Classification Coopérative des Brevets (CPC):
**G01B 11/24; G01N 21/8851; G06T 7/0004**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **30.09.2024 FR 2410464**

(71) Demandeur: **AIRBUS OPERATIONS (S.A.S.)
31060 Toulouse (FR)**

(72) Inventeurs:
• **MARTICOU, Henri**
  **31060 TOULOUSE (FR)**
• **VIARDS, Raphaël**
  **31060 TOULOUSE (FR)**

(74) Mandataire: **Cabinet Le Guen Maillet
3, impasse de la Vigie
CS 71840
35418 Saint-Malo Cedex (FR)**

(54) **PROCEDE AMELIORE D'INSPECTION AUTOMATISEE D'UNE SURFACE D'UN OBJET SOLIDE ET SYSTEME CONFIGURE POUR EXECUTER LE PROCEDE**

(57)    L'invention concerne un procédé d'inspection automatisée d'une surface (AS) d'un objet solide telle que, par exemple, une surface (AS) d'aéronef (100) ; le procédé utilisant une étape de floutage de la dite surface représentée sous la forme d'une image de type carte de profondeurs, puis trois opérations successives de dérivation appliquées à ladite image. L'invention concerne en outre un système configuré pour exécuter le procédé.

Avantageusement, il est ainsi possible de détecter de façon automatisée des défauts de planéité dans une surface (AS) d'aéronef (100) avec un niveau de précision non encore atteint.

[Fig. 1]

EP 4 718 023 A1

**Description**

DOMAINE TECHNIQUE

La présente invention concerne un procédé amélioré d'inspection automatisée d'une surface d'un objet, telle que, par exemple, une surface d'un élément d'aéronef, à partir d'informations obtenues depuis un dispositif d'inspection de surfaces, ainsi qu'un système configuré pour exécuter un tel procédé.

ÉTAT DE LA TECHNIQUE ANTÉRIEURE

Les méthodes automatisées d'inspection et de contrôle de qualité utilisées dans l'industrie amènent souvent un gain de temps important dans des étapes de fabrication de produits. Cela est particulièrement avantageux pour des équipements dont la fabrication requiert un nombre important d'éléments et d'étapes de fabrication, pour laquelle un accroissement de la cadence est souvent recherché. L'inspection de surfaces d'un aéronef lors d'opérations de fabrication ou de maintenance de cet aéronef est courante et il existe un besoin d'obtenir des moyens automatisés d'inspection et de détection d'éventuels défauts de surfaces, permettant d'obtenir un niveau de perception et de détection au moins aussi élevé que celui de l'œil humain, voire encore plus élevé, pour détecter des défauts de surfaces de très petites dimensions lors d'opérations de fabrication ou de maintenance. L'inspection de surfaces est également utilisée lors d'opérations récurrentes programmées de maintenance.

La situation peut être améliorée.

EXPOSÉ DE L'INVENTION

Un objet de la présente invention est l'obtention de moyens d'inspection automatisée de surfaces d'objets, par exemple des surfaces d'aéronef, capables de détecter un défaut de surface d'une profondeur pouvant aller, selon le cas, jusqu'au tiers de la résolution du dispositif d'inspection de surfaces (ou système d'acquisition) employé.

A cet effet, il est proposé un procédé d'inspection automatisée de l'état d'une surface d'un solide, ledit procédé comprenant :

- obtenir des premières informations, représentatives de la forme d'une surface d'un objet solide, sous la forme d'une carte de distances entre ladite surface et un capteur d'un dispositif de mesure de distances,
- obtenir des deuxièmes informations, par une application d'un filtre de floutage auxdites premières informations,
- obtenir des troisièmes informations par une première opération de dérivation desdites deuxièmes informations, en utilisant un premier opérateur de dérivation,
- obtenir des quatrièmes informations par une deuxième opération de dérivation des troisièmes informations, en utilisant un deuxième opérateur de dérivation,

et le procédé comprenant en outre :

- obtenir des cinquièmes informations par une troisième opération de dérivation des quatrièmes informations, en utilisant un troisième opérateur de dérivation, puis,
- détecter un défaut dans ladite surface, à l'aide d'un module de détection de défaut, à partir des cinquièmes informations obtenues.

Le procédé selon l'invention peut en outre comprendre les caractéristiques optionnelles suivantes, considérées seules ou en combinaisons :

- Le procédé d'inspection automatisée comprend en outre une étape de notification de la présence d'un défaut détecté dans une surface.

- Le procédé d'inspection automatisée est compris dans un procédé de fabrication d'un élément d'aéronef, lequel procédé de fabrication comprend en outre une étape de modification d'une surface à partir d'au moins une information représentative d'un défaut détecté par le procédé d'inspection automatisée.

- Le filtre de floutage utilisé par le procédé est déterminé à partir d'au moins une caractéristique du dispositif (capteur) de mesure de distances utilisé pour l'obtention des premières informations.

- Les opérateurs de dérivation utilisés par le procédé d'inspection sont tels que : ledit premier opérateur de dérivation est un opérateur de type gradient, le deuxième opérateur de dérivation est un opérateur de type matrice Hessienne, et le troisième opérateur de dérivation est un opérateur de type gradient de non-planéité.

Un autre objet de l'invention est un système d'inspection automatisée de l'état d'une surface d'un objet solide, le système comprenant une circuiterie électronique configurée pour :

-   obtenir des premières informations, représentatives de la forme d'une surface d'un objet d'un objet solide, sous la forme d'une carte de distances entre ladite surface et un capteur d'un dispositif de mesure de distances,
-   obtenir des deuxièmes informations, par une application d'un filtre de floutage auxdites premières informations,
-   obtenir des troisièmes informations par une opération de dérivation desdites deuxièmes informations, en utilisant un premier opérateur de dérivation,
-   obtenir des quatrièmes informations par une deuxième opération de dérivation des troisièmes informations, en utilisant un deuxième opérateur de dérivation,

et le procédé comprenant en outre :

-   obtenir des cinquièmes informations par une troisième opération de dérivation des quatrièmes informations, en utilisant un troisième opérateur de dérivation, puis,
-   détecter un défaut dans ladite surface, à l'aide d'un module de détection de défaut, à partir des cinquièmes informations obtenues.

Le système selon l'invention peut en outre présenter les caractéristiques optionnelles suivantes considérées seules ou en combinaisons :

-   Le système d'inspection automatisée de l'état d'une surface comprend en outre une circuiterie électronique configurée pour opérer une étape de notification de la présence d'un défaut détecté dans une surface.

-   Le système d'inspection automatisée est compris dans un système de fabrication d'un élément d'aéronef comprenant en outre des moyens pour opérer une étape de modification d'une surface à partir d'au moins une information représentative d'un défaut dans cette surface.

-   Au moins une caractéristique du filtre de floutage utilisé par le système d'inspection automatisée est déterminée à partir d'au moins une caractéristique du dispositif de mesure de distances utilisé pour obtenir les premières informations.

-   Les opérateurs de dérivation utilisés par le système d'inspection sont tels que :

ledit premier opérateur de dérivation est un opérateur de type gradient, le deuxième opérateur de dérivation est un opérateur de type matrice Hessienne, et le troisième opérateur de dérivation est un opérateur de type gradient de non-planéité.

Un autre objet de l'invention est un produit programme d'ordinateur comprenant des instructions de codes de programme pour exécuter des étapes d'un procédé tel que précédemment décrit lorsque lesdites instructions sont exécutées par un processeur d'un système d'inspection automatisée d'une surface d'un objet solide.

Enfin, l'invention concerne un dispositif de stockage comprenant un produit programme d'ordinateur tel que précité.

BRÈVE DESCRIPTION DES DESSINS

[Fig. 1] illustre schématiquement un système d'inspection automatisée de l'état d'une surface d'un objet solide selon un mode de réalisation ;

[Fig. 2] illustre schématiquement un aéronef présentant des surfaces pouvant être inspectées en utilisant le système représenté sur la Fig. 1 ;

[Fig. 3] est une représentation schématique d'un ensemble d'informations représentatives de la surface d'un objet solide et prenant la forme d'une image de type carte de profondeurs, (ou de distances) utilisées comme données d'entrée du système d'inspection automatisée déjà représenté sur la Fig. 1 ;

[Fig. 4] est un ordinogramme illustrant des étapes d'un procédé d'inspection automatisée de l'état d'une surface d'un objet solide, exécuté dans le système d'inspection automatisée déjà représenté sur la Fig. 1, selon un mode de réalisation ;

[Fig. 5] illustre des détails d'une étape globale de dérivation du procédé décrit en relation avec la Fig. 4 ; et,

[Fig. 6] est un diagramme illustrant un exemple d'architecture d'une unité de traitement de données comprenant une circuiterie électronique configurée pour exécuter le procédé décrit en relation avec la Fig. 4, selon un mode de réalisation.

## EXPOSÉ DÉTAILLÉ DE MODES DE RÉALISATION

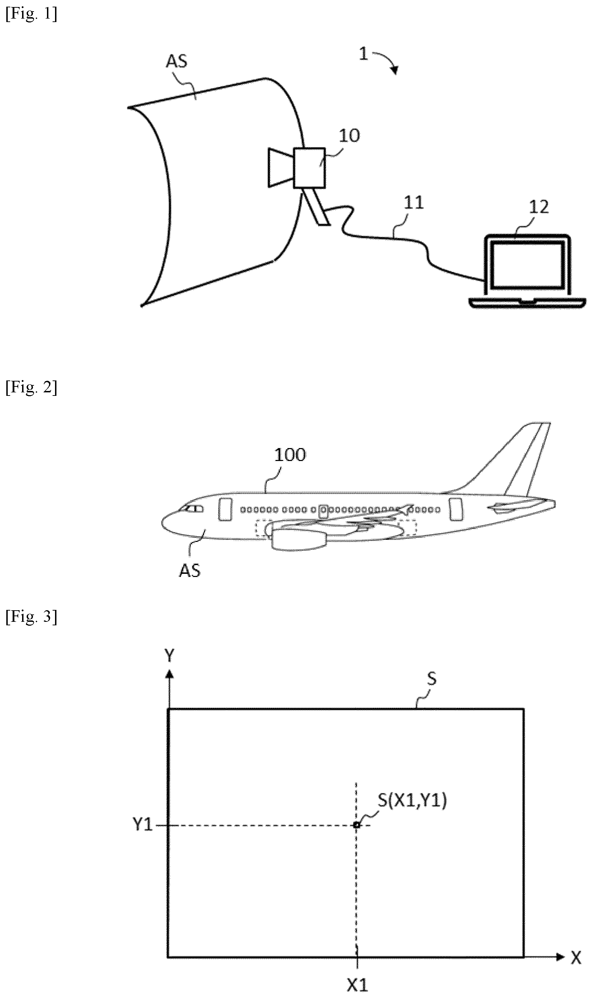

La Fig. 1 représente un système d'inspection automatisée 1 de l'état d'une surface AS d'un objet solide selon un mode de réalisation. Le système d'inspection automatisée 1 comprend un dispositif capteur 10 relié à une unité de traitement 12 via un lien de communication 11. Selon un mode de réalisation, le lien de communication 11 est filaire. Selon une variante de réalisation, le lien de communication 11 est configuré pour opérer une communication sans fil. Selon un mode de réalisation, le dispositif capteur 10 est une caméra ou un scanner opérant comme un capteur de distances configuré pour délivrer un ensemble de données de type « nuage 3D de points », ces données étant alors représentatives de la surface AS inspectée, ou plus précisément de l'état de surface de la surface AS inspectée. Le dispositif capteur de distances 10 opère des mesures de distances entre un point de référence qu'il inclut et une pluralité de points d'une surface d'un objet solide. Selon un mode de réalisation, chacun des points du nuage 3D de points est instancié sous la forme d'un couple de coordonnées x et y considérés en combinaison d'une valeur de distance S (x,y) par rapport à la caméra positionnée en référence à la normale au plan tangent à la surface inspectée AS dans le champ de mesure du capteur 10 (caméra ou scanner, par exemple). Pour chaque zone inspectée de la surface AS, un nuage 3D de points S (x, y) peut être transmis par le dispositif capteur 10 à l'unité de traitement 12 via le lien de communication 11. Ce nuage 3D de points S (x, y) constitue des premières informations représentatives de la forme de la surface AS inspectée (encore appelée ici « état de surface » de la surface AS inspectée). En d'autres termes, ce nuage 3D de points S (x, y) constitue une carte de profondeurs déterminant un ensemble de distances pour des points de la surface AS observés et inspectés dans le champ de mesure du dispositif capteur 10. L'unité de traitement 12 est configurée pour opérer des traitements successifs à partir de ces premières informations, aux fins de détecter et éventuellement de caractériser des défauts de surface présents dans la surface inspectée AS, tels que des enfoncements et des reliefs de formes et de dimensions variées (impacts, rayures, embossages, creux, etc.).

La Fig. 2 illustre un exemple de surface inspectée AS d'un aéronef 100. Selon l'exemple décrit en relation avec la Fig. 2, la surface AS est une surface d'un élément de fuselage de l'aéronef 100. Bien évidemment, cet exemple est non limitatif et le système d'inspection automatisée 1 peut être utile à l'inspection de nombreuses surfaces d'un aéronef, dont notamment le fuselage et la voilure.

La Fig. 3 illustre schématiquement une structure de données comprenant les premières informations précitées, mémorisées sous la forme d'une matrice S de valeurs dont chacun des éléments S (X, Y) est déterminé et mémorisé en référence à des coordonnées X et Y d'un plan. Par exemple, un élément S (X1, Y1) est représentatif de la distance entre le dispositif capteur 10 et un point de la surface AS dont la position est déterminée dans l'espace par les coordonnées X1 et Y1. Selon un mode de réalisation, la matrice de valeurs S constitue en outre une image des distances respectivement mesurées pour les différents points de la matrice S. Par exemple, plus un point de l'image est lumineux, plus la distance est grande entre le point correspondant de la surface inspectée AS et le capteur de mesure de distances du dispositif capteur 10, ou inversement. Les termes « point correspondant de la surface inspectée » désignent ici un point de la surface AS inspectée dont un point considéré de l'image (ou matrice) S est représentatif. Ainsi la structuration des premières informations obtenues constitue une transformation 3D vers 2D de la surface AS inspectée en une image S qui peut subir des traitements grâce à l'unité de traitement 12 aux fins de détecter la présence de défauts éventuels dans la surface inspectée AS.

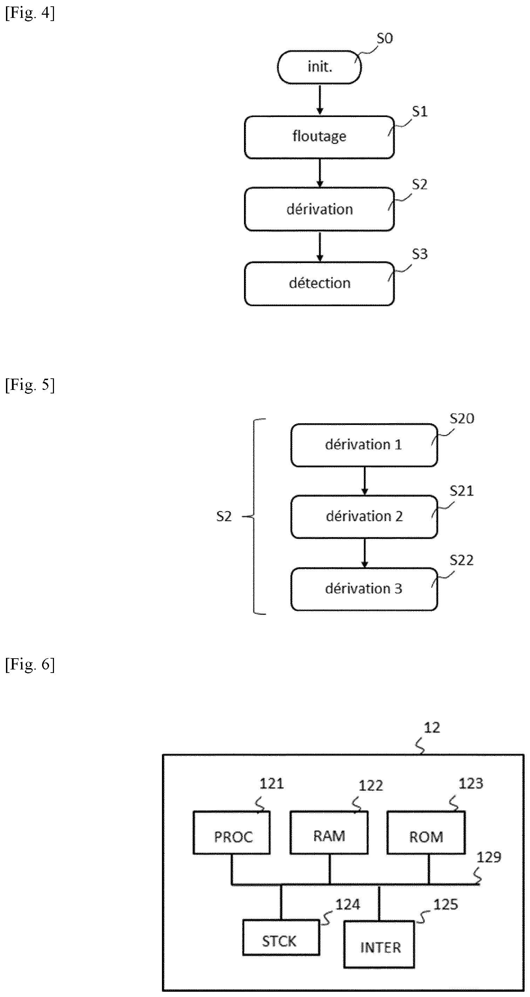

La Fig. 4 décrit des étapes d'un procédé d'inspection automatisée exécuté par et dans le système d'inspection automatisé 1, selon un mode de réalisation de l'invention. Une étape **S0** est une étape initiale (ou d'initialisation) au terme de laquelle tous les circuits et éléments du système d'inspection automatisée 1 sont sous-tension, normalement alimentés en énergie, configurés et opérationnels. En particulier, le dispositif capteur 10 est positionné sur un support ou par un opérateur face à une zone de la surface inspectée AS et des premières informations représentatives de l'état de surface de la surface AS inspectée sont transmises par le dispositif capteur 10 à l'unité de traitement 12. Lors d'une étape **S1,** une opération de floutage de la matrice (ou image) S est opérée sur la matrice-image instanciée par les premières informations obtenues par l'unité de traitement 12. Selon un mode de réalisation, l'opération de floutage opère un floutage de taille suffisante pour lisser la surface de l'objet solide ainsi que le bruit de l'outil de mesure mais sans faire disparaître les défauts recherchés (par exemple un flou gaussien avec un sigma de 2 mm). La matrice ou image résultante de ce floutage constitue de nouvelles informations, représentatives de la surface AS, sous la forme d'une matrice-image floutée. Ensuite, une étape **S2** consiste à opérer astucieusement une triple dérivation de la matrice-image floutée appliquée aux informations issues du floutage. Les termes « triple dérivation » désignent ici trois opérations successives de dérivation appliquées à la matrice-image représentative de la surface inspectée AS (ou d'une zone ou portion de cette surface), en utilisant astucieusement et respectivement trois opérateurs de dérivation différents. Le détail de ces opérateurs est décrit plus loin dans la présente description, en relation avec la Fig. 5. Enfin une détection d'un ou plusieurs éventuels défauts présents dans la surface inspectée AS est réalisée lors d'une étape **S3,** en utilisant un module de détection de défauts. Selon un mode de réalisation, le module de détection de défaut est implémenté par l'unité de traitement 12. Selon un mode de réalisation, le module de détection de défaut s'appuie sur une approche de segmentation classique pouvant se servir d'un algorithme de détection de blob, à l'instar d'un filtre de type différence de gaussiennes, ou d'une méthode de partitionnement telle que l'algorithme des k-moyennes, ou encore d'un algorithme de type ligne de partage des eaux (plus connu sous le nom de "watershed" en anglais). Selon un autre mode de réalisation, le module de détection de défaut est un réseau de neurones NN entraîné pour réaliser des tâches de segmentation et/ou de classification. Par exemple, il peut s'agir de l'algorithme « YOLO » (sigle anglais de « You Only Look Once ») ou d'un algorithme de la famille ResNet (pour "Residual Networks" en anglais), capables d'opérer simultanément une détection et une classification, ou encore de l'algorithme de segmentation U-Net.

L'algorithme de détection sélectionné opère à partir de la matrice-image issue des trois dérivations successives postérieures aux floutages et fournit des informations permettant l'identification et la localisation des éventuels défauts de surface. Selon un mode de réalisation, cette mise en évidence est réalisée via l'instanciation de boîtes englobantes assorties chacune d'une probabilité de présence d'un défaut dans la zone délimitée par la boîte englobante de la matrice-image résultant des trois dérivations. Il est alors possible, lors d'une étape de notification **S4** (non représentée sur la Fig. 4), subséquente à l'étape S3, de délivrer, le cas échéant, des informations de localisation d'un ou de plusieurs éventuels défauts détectés dans la surface AS inspectée, pour contrôler ou organiser des modifications de processus de fabrication et/ou des opérations de maintenance.

La **Fig. 5** fournit des détails de l'étape S2 de dérivation selon un mode de réalisation non limitatif.

Selon ce mode de réalisation, l'étape S2 comprend trois opérations de dérivation successives en utilisant respectivement trois opérateurs de dérivation.

Une première étape **S20** (première sous-étape de S2), subséquente à l'étape S1, opère un calcul de gradient de la surface inspectée, lequel s'exprime sous la forme :

$$\nabla s(x, y) = \begin{bmatrix} \frac{\partial s}{\partial x} \\ \frac{\partial s}{\partial y} \end{bmatrix} = \begin{bmatrix} s_x \\ s_y \end{bmatrix}$$

où S (x, y) est la matrice-image après floutage obtenue au terme de l'étape S1 de floutage.

En effet, l'opérateur différentiel de premier ordre pour une surface est le gradient. Il permet de déterminer en chaque point de la surface, une quantité vectorielle définissant la direction et la magnitude de la pente la plus importante en un point considéré de la surface.

Une représentation en deux dimensions de la surface est ainsi obtenue, sous la forme d'un champ scalaire correspondant à la norme du gradient. Cette représentation fournit avantageusement une information sur l'inclinaison de la pente en chaque point de la surface analysée.

Une deuxième étape **S21** (deuxième sous-étape de S2), subséquente à l'étape S20, opère un calcul de matrice Hessienne, lequel s'exprime sous la forme :

$$H(x, y) = \begin{bmatrix} s_{xx} & s_{xy} \\ s_{yx} & s_{yy} \end{bmatrix}$$

où

$$s_{xx} = \frac{\partial^2 S(x,y)}{\partial x^2} \; ; s_{xy} = \frac{\partial^2 S(x,y)}{\partial x \partial y} \; ; s_{yx} = \frac{\partial^2 S(x,y)}{\partial y \partial x} \; ; \text{ et } s_{yy} = \frac{\partial^2 S(x,y)}{\partial y^2} \, ,$$

permettant de déterminer des variations locales de planéité :

$$\sigma(x, y) = S_{xx}^2 + S_{xy}^2$$

La matrice Hessienne, encore appelée matrice des dérivées secondes, est l'équivalent du gradient en géométrie différentielle du second ordre. Il s'agit d'une quantité matricielle donnant pour chaque point de la surface analysée des informations liées à la courbure de la surface en ce point.

*S'agissant des valeurs propres de la matrice Hessienne :*

Les valeurs propres de *H* sont appelées courbures principales et correspondent à la force de la courbure selon les directions principales. Invariantes par rotation, ce sont des valeurs réelles, notées $\kappa_1$ et $\kappa_2$ telles que $\kappa_1 \geq \kappa_2$.
Ces valeurs propres de H sont calculées de la manière suivante :

$$\kappa = \frac{(S_{xx}+S_{yy})\pm\sqrt{4S_{xy}^2+(S_{xx}-S_{yy})^2}}{2}$$

où K est $K_1$ ou $K_2$ selon l'opérateur + ou -
**[0026]** *S'agissant des directions principales ou coordonnées de Jauge du second ordre :* Les vecteurs propres de H sont appelés directions principales et correspondent aux directions des courbures principales, lesquelles directions sont toujours orthogonales.
Ces directions principales sont nommées coordonnées de jauge *p* et q, tel que *p* correspond à la direction de plus grande courbure et *q* à la direction de plus petite courbure.
Ces directions principales sont calculées de la manière suivante :

$$p = u / \| u \| \ et \ q = v / \| v \|$$

$$\text{où } u = \left\{1, \frac{\kappa_1-S_{xx}}{S_{xy}}\right\} \ \text{et où } v = \left\{1, \frac{\kappa_2-S_{xx}}{S_{xy}}\right\}$$

Des dérivées partielles selon les coordonnées de Jauge du second ordre peuvent alors être déterminées et utilisées.
Selon des variantes de réalisation, plusieurs projections en deux dimensions de la matrice Hessienne peuvent être obtenues et utilisées, sous la forme d'un champ scalaire. Notons que, dans ce contexte, par définition,

$$S_{pp} = \frac{\partial^2 S}{\partial p^2} = K_1 \ \text{et} \ s_{qq} = \frac{\partial^2 S}{\partial q^2} = K_2$$

Selon un mode de réalisation, il est déterminé, à partir de la matrice Hessienne, une projection de type courbure de Gauss G, correspondant au déterminant de la matrice Hessienne, et fournissant une mesure intrinsèque de la courbure en chaque point de la surface :

$$G = S_{pp}.S_{qq} = \kappa_1.\kappa_2 = det(H)$$

Selon un mode de réalisation, il est déterminé, à partir de la matrice Hessienne, une projection de type courbure moyenne HM, correspondant à la moyenne des courbures principales ou valeurs propres de la matrice Hessienne, exprimant en chaque point la courbure moyenne de la surface en ce point :

$$HM = \frac{S_{pp}+S_{qq}}{2} = \frac{\kappa_1 + \kappa_2}{2}$$

Selon un mode de réalisation, il est déterminé, à partir de la matrice Hessienne, une projection de type laplacien, correspondant à la trace de la matrice Hessienne, pouvant aussi se calculer directement comme la divergence du gradient, fournit lui aussi une information sur la courbure locale en chaque point :

$$\Delta S(x,y) = \nabla^2 S(x,y) = div(\nabla S(x,y)) = trace(H) = S_{xx} + S_{yy}$$

Selon un mode de réalisation, il est déterminé, à partir de la matrice Hessienne, une projection de type écart de planéité σ, correspondant à la somme des carrées des courbures principales ou valeurs propres de la matrice Hessienne, exprimant en chaque point de la surface, son "taux de non-planéité" local :

$$\sigma = S_{pp}^2 + S_{qq}^2 = \kappa_1^2 + \kappa_2^2$$

Selon un mode de réalisation, il est déterminé, à partir de la matrice Hessienne, une projection de type degré de courbure C, correspondant à la racine carrée de l'écart de planéité :

$$C = \sqrt{S_{pp}^2 + S_{qq}^2} = \sqrt{\kappa_1^2 + \kappa_2^2}$$

Selon un mode de réalisation, il est déterminé, à partir de la matrice Hessienne, une projection de type angle de forme F, correspondant à l'arc tangente du rapport des courbures principales, et fournissant une information sur la forme locale de la surface en chaque point :

$$F = tan^{-1}\left(\frac{S_{qq}}{S_{pp}}\right) = tan^{-1}\left(\frac{\kappa_2}{\kappa_1}\right)$$

Enfin une troisième étape S22 (troisième sous-étape de S2), subséquente à l'étape S21, opère une dérivation dite « de troisième ordre », en utilisant un opérateur nouveau définissant un taux de variation local de planéité précédemment déterminé, de nature à mettre en évidence des défauts, y compris de très petites dimensions en insérant les informations résultantes dans un module de détection de défauts éventuels lors de l'étape S3, subséquente à l'étape S22 :

$$\nabla\sigma(x, y) = 2 \cdot \begin{bmatrix} S_{xx} \cdot S_{xxx} + S_{yy} \cdot S_{yyx} \\ S_{xx} \cdot S_{xxy} + S_{yy} \cdot S_{yyy} \end{bmatrix}$$

Il n'existe pas d'opérateur différentiel de troisième ordre susceptible d'être exprimé sous une forme triviale. Selon un mode de réalisation, il est proposé d'appliquer l'opérateur de dérivation du premier ordre (gradient) à l'un des champs scalaires obtenu par dérivation du second ordre (e.g. calcul du gradient des écarts de planéité).

Une représentation en deux dimensions est alors obtenue sous la forme d'un champ scalaire correspondant à la norme dudit gradient. Cette représentation fournit une information sur le taux de variation de la courbure ou de la planéité de la surface en chacun de ses points.

Selon des variantes de réalisation, il est possible d'opérer de nombreuses autres combinaisons permettant d'obtenir une information différentielle du troisième ordre (e.g. l'application de l'opérateur gradient puis du calcul du champ scalaire associé répétée successivement à trois reprises, le calcul de la Hessienne du champ scalaire obtenu après la première dérivation, etc.). Ces variantes permettent toutes avantageusement de mettre en évidence une information reliée à un taux de variation de courbure de la surface.

La Fig. 6 illustre schématiquement un exemple d'architecture interne de l'unité de traitement 12 du système 1 d'inspection automatisée, configurée pour exécuter le procédé précédemment décrit.

Selon l'exemple d'architecture matérielle représenté à la Fig. 6, l'unité de traitement 12 comprend alors, reliés par un bus de communication 129 : un processeur ou CPU (« Central Processing Unit » en anglais) 121 ; une mémoire vive RAM (« Random Access Memory » en anglais) 122 ; une mémoire morte ROM (« Read Only Memory » en anglais) 123 ; une unité de stockage telle qu'un disque dur (ou un lecteur de support de stockage, tel qu'un lecteur de cartes SD (« Secure Digital » en anglais) 124 ; un module d'interfaces de communication 125 permettant à l'unité de traitement 12 de communiquer avec des dispositifs distants, tels que le dispositif capteur 10 configuré pour opérer des analyses de surfaces par mesures de distances ou encore d'autres équipements distants, par exemple des équipements d'un site de production d'aéronefs ou d'un site de maintenance d'aéronefs.

Le processeur 121 de l'unité de traitement 12 est capable d'exécuter des instructions chargées dans la RAM 122 à partir de la ROM 123, d'une mémoire externe (non représentée), d'un support de stockage (tel qu'une carte SD), ou d'un réseau de communication. Lorsque l'unité de traitement 12 est mise sous tension, le processeur 121 est capable de lire de la RAM 122 des instructions et de les exécuter. Ces instructions forment un programme d'ordinateur causant la mise en œuvre, par le processeur 121 de l'unité de traitement 12, de tout ou partie d'un procédé d'inspection automatisé tel que précédemment décrit.

Tout ou partie d'un tel procédé d'inspection automatisée de surfaces, par exemple de surfaces d'aéronef, peut alors être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'unité de traitement 12 comprend de la circuiterie électronique configurée pour mettre en œuvre un procédé d'inspection automatisée de surfaces d'objets solides. Bien évidemment, l'unité de traitement 12 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

## Revendications

1. Procédé d'inspection automatisée de l'état d'une surface (AS) d'un objet solide (100), ledit procédé comprenant :

   - obtenir (S0) des premières informations, représentatives de la forme de la surface (AS) de l'objet solide, sous la forme d'une carte de distances entre ladite surface (AS) et un capteur d'un dispositif de mesure (10),
   - obtenir (S1) des deuxièmes informations, par une application d'un filtre de floutage auxdites premières informations,
   - obtenir (S2, S20) des troisièmes informations par une première opération de dérivation desdites deuxièmes informations, en utilisant un premier opérateur de dérivation,
   - obtenir (S2, S21) des quatrièmes informations par une deuxième opération de dérivation des troisièmes informations, en utilisant un deuxième opérateur de dérivation,

   et ledit procédé étant **caractérisé en ce qu'**il comprend en outre :

   - obtenir (S2, S22) des cinquièmes informations par une troisième opération de dérivation des quatrièmes informations, en utilisant un troisième opérateur de dérivation, puis,
   - détecter un défaut dans ladite surface (AS), à l'aide d'un module de détection de défaut, à partir des cinquièmes informations obtenues.

2. Procédé d'inspection automatisée selon la revendication 1, comprenant en outre une étape de notification (S4) de la présence dudit défaut détecté dans ladite surface (AS).

3. Procédé de fabrication d'un élément d'aéronef (100) comprenant un procédé d'inspection automatisée selon la revendication 2 et une étape de modification de ladite surface (AS) à partir d'au moins une information représentative dudit défaut.

4. Procédé selon l'une quelconque des revendications 1 à 3, selon lequel ledit filtre de floutage est déterminé à partir d'au moins une caractéristique dudit dispositif (10) de mesure de distances.

5. Procédé selon l'une quelconque des revendications 1 à 4, selon lequel :

   ledit premier opérateur de dérivation est un opérateur de type gradient,
   ledit deuxième opérateur de dérivation est un opérateur de type matrice Hessienne, et,
   ledit troisième opérateur de dérivation est un opérateur de type gradient de non-planéité.

6. Système d'inspection automatisée (1) de l'état d'une surface (AS) d'un objet solide, (100) ledit système comprenant une circuiterie électronique configurée pour :

   - obtenir (S0) des premières informations, représentatives de la forme d'une surface d'un objet solide, sous la forme d'une carte de distances entre ladite surface et un capteur d'un dispositif de mesure,
   - obtenir (S1) des deuxièmes informations, par une application d'un filtre de floutage auxdites premières informations,
   - obtenir (S2, S20) des troisièmes informations par une opération de dérivation desdites deuxièmes informations, en utilisant un premier opérateur de dérivation,
- obtenir (S2, S21) des quatrièmes informations par une deuxième opération de dérivation des troisièmes informations, en utilisant un deuxième opérateur de dérivation,

et ledit système étant **caractérisé en ce qu'**il comprend en outre une circuiterie électronique configurée pour :

- obtenir (S2, S22) des cinquièmes informations par une troisième opération de dérivation des quatrièmes informations, en utilisant un troisième opérateur de dérivation, puis,
- détecter (S3) un défaut dans ladite surface (AS), à l'aide d'un module de détection de défaut, à partir des cinquièmes informations obtenues.

7. Système d'inspection automatisée (1) de l'état d'une surface (AS) selon la revendication 6 comprenant en outre une circuiterie électronique configurée pour opérer une étape de notification (S4) de la présence dudit défaut détecté dans ladite surface (AS).

8. Système de fabrication d'un élément d'aéronef (100) comprenant un système d'inspection automatisée (1) selon la revendication 7 et des moyens pour opérer une étape de modification de ladite surface (AS) à partir d'au moins une information représentative dudit défaut.

9. Système selon l'une quelconque des revendications 6 à 8, dans lequel ledit filtre de floutage est déterminé à partir d'au moins une caractéristique dudit dispositif de mesure de distances (10).

10. Produit programme d'ordinateur comprenant des instructions de codes de programme pour exécuter des étapes d'un procédé selon l'une des revendications 1 à 5 lorsque lesdites instructions sont exécutées par un processeur d'un système d'inspection automatisée d'une surface d'un objet solide.

11. Dispositif de stockage comprenant un produit programme d'ordinateur selon la revendication 10.

[Fig. 1]

[Fig. 2]

[Fig. 3]

[Fig. 4]

[Fig. 5]

[Fig. 6]

Europäisches
Patentamt

European
Patent Office

Office européen
des brevets

# RAPPORT DE RECHERCHE EUROPEENNE

**Numéro de la demande**

EP 25 20 4881

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JOVANCEVIC IGOR ET AL: "3D Point Cloud Analysis for Detection and Characterization of Defects on Airplane Exterior Surface", JOURNAL OF NONDESTRUCTIVE EVALUATION, PLENUM PUBLISHING CORPORATIONT. NEW YORK, US, vol. 36, no. 4, 17 octobre 2017 (2017-10-17), pages 1-17, XP036341678, ISSN: 0195-9298, DOI: 10.1007/S10921-017-0453-1 [extrait le 2017-10-17] * 3. Methodology for Defect Detection and Characterization; pages 3-11 * | 1-11 | INV. G01B11/24 G01N21/88 G06T7/00 |
| A | US 2008/204741 A1 (HILL KEITH MITCHELL [US] ET AL) 28 août 2008 (2008-08-28) * revendications 1-3 * | 1-11 | |

**DOMAINES TECHNIQUES RECHERCHES (IPC)**

G01B
G06T
G01N

Le présent rapport a été établi pour toutes les revendications

| Lieu de la recherche | Date d'achèvement de la recherche | Examinateur |
|---|---|---|
| Munich | 13 février 2026 | Trique, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**EP 4 718 023 A1**

## ANNEXE AU RAPPORT DE RECHERCHE EUROPEENNE
## RELATIF A LA DEMANDE DE BREVET EUROPEEN NO.

EP 25 20 4881

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2026

| Document brevet cité au rapport de recherche | Date de publication | Membre(s) de la famille de brevet(s) | Date de publication |
|---|---|---|---|
| US 2008204741 A1 | 28-08-2008 | CN 101663574 A | 03-03-2010 |
| | | JP 6025265 B2 | 16-11-2016 |
| | | JP 2010519559 A | 03-06-2010 |
| | | JP 2014167485 A | 11-09-2014 |
| | | KR 20090113910 A | 02-11-2009 |
| | | TW 200902961 A | 16-01-2009 |
| | | US 2008204741 A1 | 28-08-2008 |
| | | WO 2008106015 A2 | 04-09-2008 |

EPO FORM P0460

Pour tout renseignement concernant cette annexe : voir Journal Officiel de l'Office européen des brevets, No.12/82